**Europäisches Patentamt**

**European Patent Office**

**Office européen des brevets**

(19)

(11) Numéro de publication: **0 046 122**
**B1**

(12) **FASCICULE DE BREVET EUROPEEN**

(45) Date de publication du fascicule du brevet:
03.07.85

(21) Numéro de dépôt: **81401284.5**

(22) Date de dépôt: **11.08.81**

(51) Int. Cl.⁴: **F 03 D 3/06**, F 03 D 7/06

(54) **Centrale éolienne à turbines verticales.**

(30) Priorité: **13.08.80 FR 8017893**

(43) Date de publication de la demande:
**17.02.82 Bulletin 82/7**

(45) Mention de la délivrance du brevet:
**03.07.85 Bulletin 85/27**

(84) Etats contractants désignés:
**BE DE FR GB IT NL**

(56) Documents cités:
**BE - A - 821 161**
**DE - A - 2 601 069**
**DE - C - 47 908**
**FR - A - 2 285 527**
**FR - A - 2 289 769**
**FR - A - 2 345 600**
**FR - A - 2 468 002**
**US - A - 2 990 887**
**US - A - 3 902 072**
**US - A - 4 129 787**

(73) Titulaire: **Bourriaud, Michel Edouard Raymond, 4 Allee du Val de Bievre, F-92340 Bourg la Reine (FR)**

(72) Inventeur: **Bourriaud, Michel Edouard Raymond, 4 Allee du Val de Bievre, F-92340 Bourg la Reine (FR)**

ACTORUM AG

## Description

L'invention appartient au domaine des turbines à vent, elle concerne une centrale éolienne comportant une ou plusieurs turbines verticales réalisant la transformation de l'énergie éolienne en d'autres formes d'énergie: mécanique, électrique, hydraulique par exemple.

L'énergie éolienne représente l'une des grandes sources d'énergie renouvelable, disponible à la surface de la terre. Jusqu'à présent, son utilisation par l'homme n'a pas été une véritable réussite dans le domaine des fortes puissances, en dehors, il est vrai, de son emploi pendant des siècles pour la propulsion des navires. Par ailleurs, pendant la période de développement industriel, elle fut progressivement abandonnée au profit des sources d'énergie stables: énergies hydrauliques et thermiques.

Le trait dominant de l'énergie éolienne consiste en son caractère fantasque, en effet son énergie cinétique peut facilement varier d'un facteur supérieur à cent entre la petite brise et le coup de vent, ce qui explique les nombreux échecs dans les tentatives d'utilisation du vent.

Il existe actuellement deux grandes familles d'éoliennes, celles du type hélice ou moulin à axe horizontal, et celles du type turbine à axe vertical. Les premières présentent un certain nombre d'inconvénients et de limitations qui proviennent de la formule même de l'hélice et de la grande variabilité de la vitesse du vent, par exemple:
— limitation de vitesse périphérique et nombreux phénomènes vibratoires,
— mauvaise résistance aux rafales et tempêtes,
— impossibilité de capter le maximum d'énergie lorsque le vent souffle en tempête.

Les secondes ont été peu développées et n'ont pas encore conduit à des turbines de puissance importante. Du point de vue technique, on distingue deux types de turbines à axe vertical: les turbines à flux périphérique et des turbines à flux transversant. Dans les turbines à flux périphérique, par exemple moulin Persan et moulinet, le travail est fourni par l'effet de traînée. Dans les turbines à flux transversant, par exemple du type Darrieus, le travail est fourni par les effets de portance et de traînée de profils.

Les réalisations les plus connues sont anciennes: rotor de Savonius, breveté en 1929, rotor de Darrieus, breveté en 1931. Il convient également de citer les turbines multipales à aubes fixes et les turbines multipales à aubes pivotantes entraînées en rotation en sens inverse de la rotation du rotor. D'une façon générale, ces turbines présentent comme défauts: des rendements faibles, l'impossibilité de contrôler la puissance, et également l'impossibilité de capter le maximum d'énergie pendant les périodes de vent fort. Par ailleurs, certaines éoliennes comme les turbines Darrieus doivent être lancées pour en assurer le démarrage.

Pour tenter d'améliorer le rendement et de maîtriser la puissance par vent fort, l'idée est venue de faire varier dans le cycle de rotation l'incidence des aubes par rapport au vent. C'est ainsi qu'en 1888 Parensen faisait breveter un dispositif permettant sur une éolienne verticale du type moulin Persan, de modifier l'incidence d'une aube poussée par le vent, de façon à augmenter l'effet moteur (brevet DE-C-47 908). Cette invention, destinée à propulser un bateau ne put trouver d'application pratique. L'analyse que l'on peut en faire actuellement permet de déceler deux inconvénients majeurs: d'une part la grande inertie des ensembles mobiles entraînant l'impossibilité de démarrer par vents faibles et moyens, et d'autre part les solutions peu mécaniques adoptées pour faire varier l'incidence des aubes, telles que chemin de roulement courbe, conduisant à une imprécision dans le mouvement et de nombreux frottements.

De nos jours, la réalisation d'une nouvelle turbine éolienne destinée à l'utilisation rationnelle de cette énergie nécessite d'entreprendre une étude aérodynamique approfondie, de concevoir une turbine robuste et d'un bon rendement, ainsi qu'une régulation de puissance de grande efficacité.

En partant d'une centrale éolienne selon le préambule de la revendication 1 – connue de DE-C-47 908 – le problème technique à résoudre est la réalisation d'une telle centrale éolienne qui présente d'une part de bons rendements et d'autre part la possibilité de capter le maximum d'énergie pendant les périodes de vent violent.

La solution du problème mentionné ci-dessus fait l'objet de la partie caractérisante de la revendication 1.

Des modes de réalisation additionnels sont caractérisés dans les sous-revendications.

La présente invention a pour objet une centrale éolienne comportant un certain nombre d'équipements et dispositifs assurant des fonctions spécifiques:
— les équipements récepteurs de l'énergie éolienne, constitués par une ou plusieurs turbines orientables dans la direction du vent et dont le ou les axes de rotation sont disposés verticalement. Chaque turbine comporte en partie haute et en partie basse plusieurs bras horizontaux munis d'aubes orientables disposées parallèlement à l'axe du rotor et de section transversale courbe dont la forme correspond à un profil aérodynamique. Ces turbines sont du type à flux transversant. Les aubes peuvent être de deux types différents, soit des aubes de section transversale mince, soit des aubes de sections transversale épaisse, semblables à des profils d'ailes d'avion:
— une aube mince est constituée dans sa section transversale par un profil formé par deux courbes parallèles; l'épaisseur relative du profil est inférieure à 7%. Les aubes minces peuvent être réalisées en matériaux rigides ou en matériaux flexibles dans le sens transversal de l'aube et permettant par un dispositif particulier d'inverser le sens de la courbure;
— une aube épaisse est constituée dans sa section transversale par un profil aérodynamique possédant de très bonnes caractéristiques de portance aux incidences positives et négatives. Les profils utilisés sur les avions de voltige se révèlent particulièrement bien adaptés. L'épaisseur relative du profil est comprise entre 7% et 20%.

Les principes de fonctionnement de la turbine sont les suivants:

Pendant la rotation du rotor, l'orientation de chaque aube par rapport à la direction du vent entrant est commandée par un dispositif de variation cyclique d'incidence qui permet d'optimiser le travail fourni par la turbine en fonction des paramètres les plus importants:

- caractéristiques aérodynamiques des profils-d'aubes
- nombre d'aubes du rotor
- vitesse du vent entrant
- vitesse périphérique du rotor
- écoulements réels du vent dans la turbine aux différents régimes de rotation.

Le dispositif de variation cyclique d'incidence permet en outre le démarrage de la turbine et la régulation de puissance. Les modes de fonctionnement et le cycle moteur des turbines sont différents selon le type d'aube utilisé.

Pendant un tour de rotor, le cycle du mouvement d'une aube mince rigide compté dans le sens de la rotation est le suivant:

- travail positif dans le vent dans la zone avant et la zone arrière du rotor par rapport au vent entrant
- retour à contrevent à trainée minimale
- inversion de courbure par retournement de l'aube.

Dans les mêmes conditions, le cycle de mouvement d'une aube mince souple est le suivant:

- travail positif dans le vent dans la zone avant e la zone arrière du rotor par rapport au vent entrant
- retour à contrevent à traînée minimale
- inversion de courbure de l'aube.

Les aubes minces introduisent une discontinuité dans le cycle effectué par une pale pendant un tour de rotor, cette discontinuité est liée à la nécessaire inversion de courbure en fin de cycle.

Le cycle du mouvement d'une aube épaisse est le suivant:

- travail positif dans le vent dans la zone avant et la zone arrière du rotor par rapport au vent entrant
- retour à contrevent à traînée minimale.

Les aubes épaisses à profils aérodynamiques d'ailes d'avion n'introduisent pas de discontinuité, mais imposent pour obtenir le meilleur rendement un fonctionnement à incidences négatives dans la zone de travail située à l'arrière du rotor par rapport au vent entrant.

La vitesse du vent étant essentiellement changeante, le fonctionnement de ce type de turbine ne s'effectue pas à vitesse de rotation constante, mais avec une vitesse de rotation déterminée en fonction de la vitesse du vent entrant; en effet, pour ces turbines, le rendement se révèle très sensible aux variations du rapport

$$\frac{\text{vitesse périphérique du rotor}}{\text{vitesse du vent entrant}}$$

Les turbines sont munies de carénages latéraux permettant d'une part de guider le vent vers les rotors et d'autre part de masquer la partie du mouvement de rotation qui se situe à contrevent. Dans le cas de plusieurs turbines, les carénages assurent également la répartition de l'écoulement dans chaque turbine en limitant les interférences entre turbines.

Les équipements recevant l'énergie produite par la ou les turbines et réalisant la transformation d'énergie sont les suivants:

- génératrices électriques
- pompes hydrauliques à haute pression permettant d'atteindre 400 bars.

Les équipements auxiliaires nécessaires au bon fonctionnement de la centrale comprennent:

- freins d'immobilisation des rotors de turbines
- liaisons mécaniques des turbines
- multiplicateur de vitesse
- embrayages
- dispositif d'orientation des turbines.

Le stockage d'énergie est constitué par des réservoirs hydrauliques à haute pression capables de fonctionner à 400 bars.

Un dispositif de régulation assure l'adaptation de la production d'énergie en fonction de la vitesse du vent.

Une centrale éolienne conforme à l'invention, présente par rapport à l'état de la technique un certain nombre d'avantages particuliers qui sont les suivants:

- faible inertie des turbines et facilité de démarrage
- rendement élevé pour une large gamme de vitesses du vent
- régulation de la puissance de la turbine
- possibilité de réalisation de turbines de grandes dimensions
- résistance aux rafales et tempêtes
- production maximale d'énergie pendant les périodes de vent violent
- possibilité de stockage d'importantes quantités d'énergie
- modularité de la construction.

Les différents modes de réalisation et caractéristiques de l'invention sont exposés de façon plus détaillée ci-après, à l'aide des dessins suivants:

La figure 1 est une vue schématique partielle, en élévation, d'un groupe de turbines où ne sont pas représentés les carénages.

La figure 2 est une vue en coupe horizontale d'un groupe de turbines tournant dans le même sens.

La figure 3 est une vue en coupe horizontale d'un groupe de deux turbines tournant en sens inverse.

La figure 4 représente en perspective, à grande échelle, une aube mince rigide.

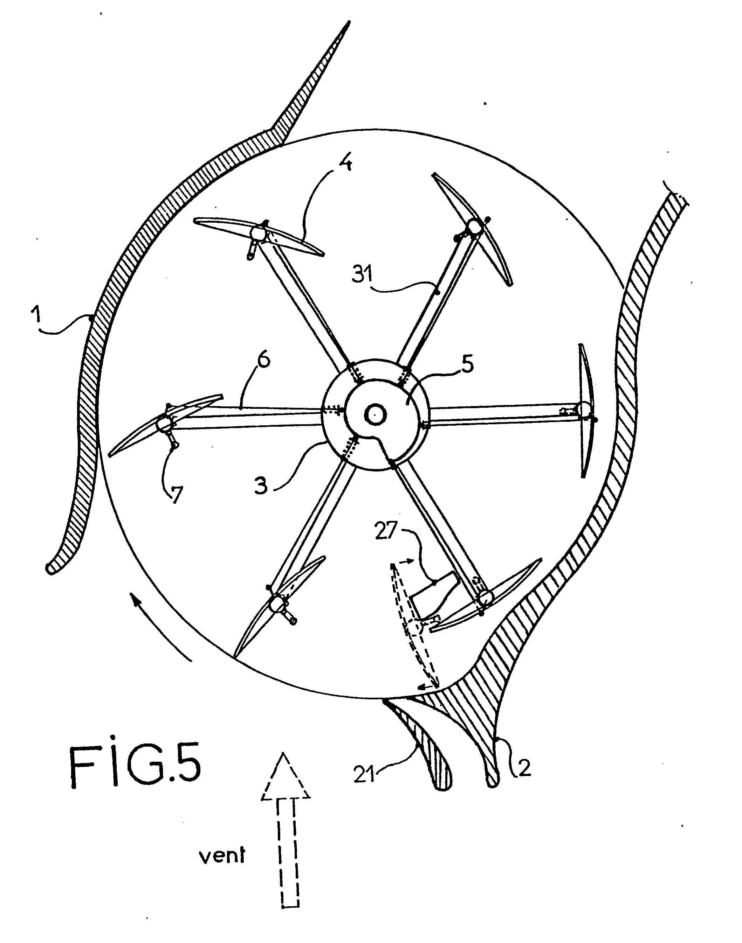

La figure 5 est une vue en coupe horizontale d'un rotor de turbine à aubes minces rigides.

La figure 6 représente en perspective, à grande échelle, une aube mince souple.

La figure 7 représente en perspective, à grande échelle, une plaque d'extrémité d'une aube mince souple.

La figure 8 représente schématiquement, à grande échelle, le mécanisme d'inversion de courbure d'une aube mince souple.

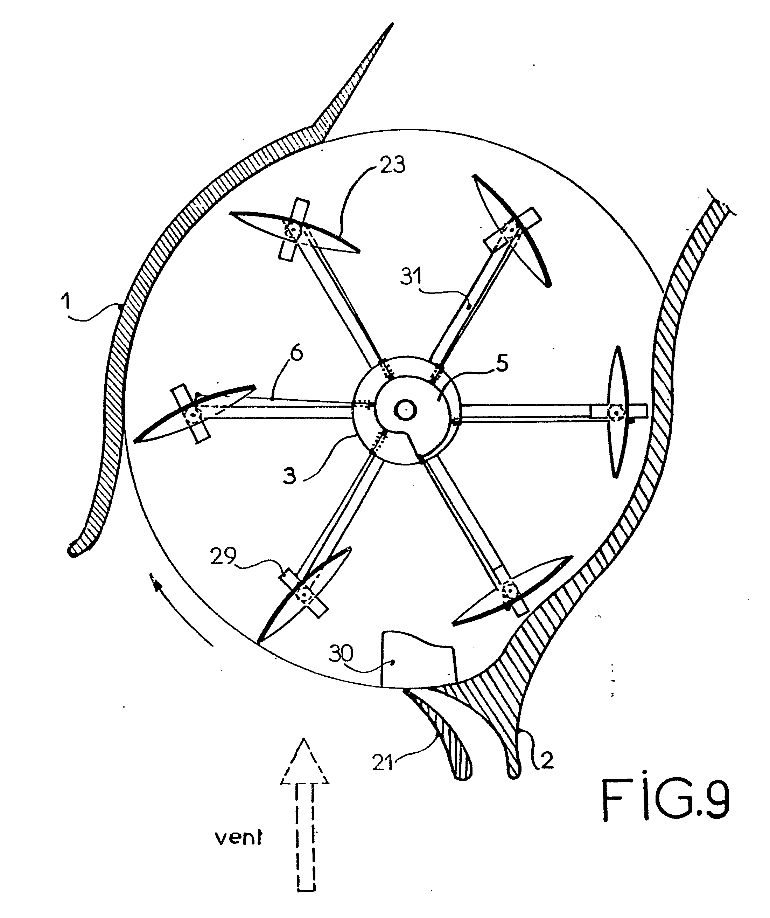

La figure 9 est une vue en coupe horizontale d'un rotor de turbine à aubes minces souples.

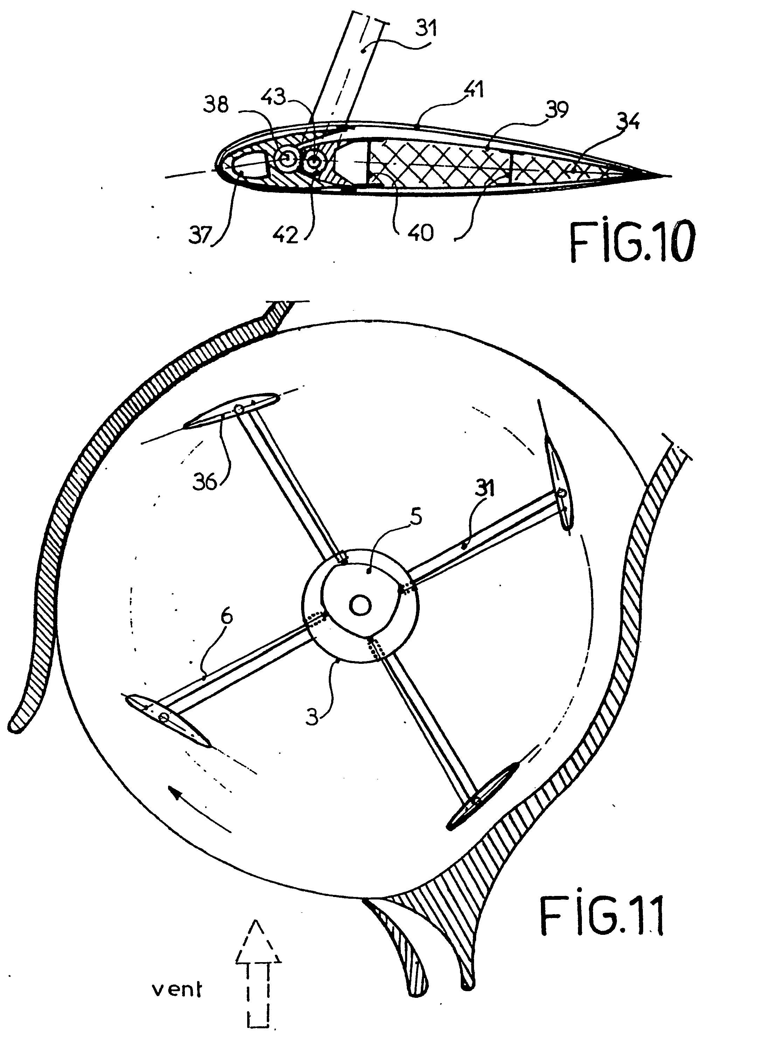

La figure 10 représente une coupe transversale d'une aube épaisse déformable.

La figure 11 est une vue en coupe horizontale d'un rotor de turbine à aubes épaisses déformables.

Une centrale éolienne conforme à la présente invention est caractérisée, au niveau des équipements récepteurs de l'énergie du vent, par une turbine ou un groupe de turbines dont l'axe ou les axes sont disposés verticalement. Les turbines sont munies de carénages latéraux 1 de forme aérodynamique qui ont pour but d'une part de guider le vent et d'autre part de masquer la partie du mouvement de rotation qui se situe à contrevent. La partie avant du carénage est constituée, du côté retour à contrevent, par un bec fixe 2 muni d'un ou deux volets mobiles 21 disposés latéralement et destinés à régler partiellement l'admission du vent.

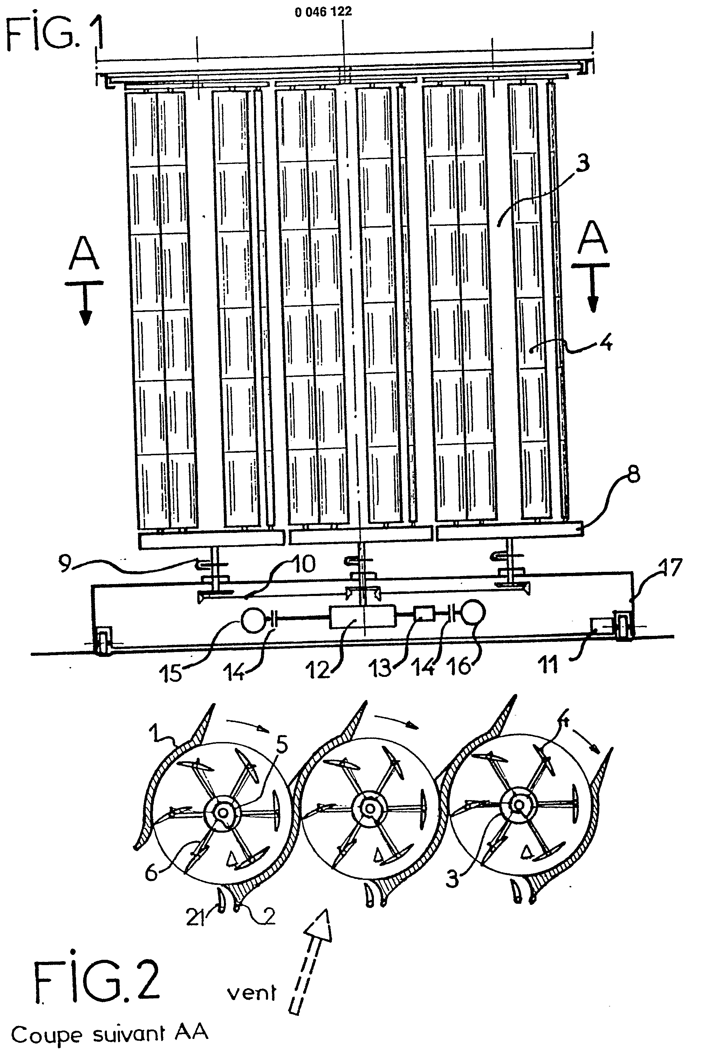

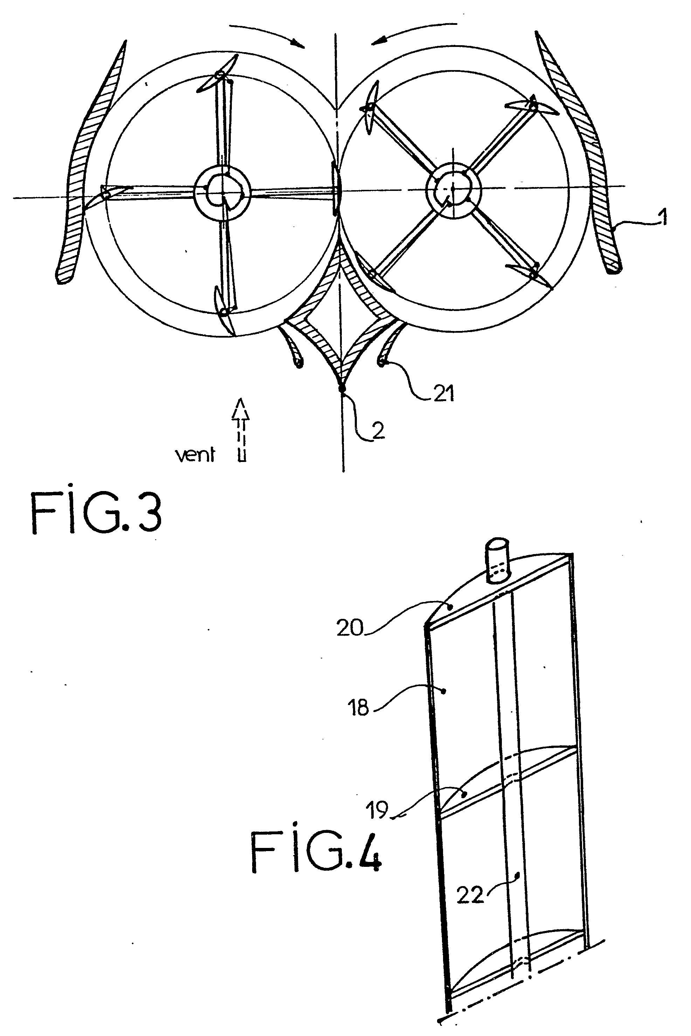

Le groupement des turbines est réalisé avec des rotors juxtaposés tournant dans le même sens comme représenté par la figure 2, ou bien avec des rotors tournant en sens inverse comme représenté par la figure 3, ce qui permet dans ce cas de réduire l'importance des carénages.

Réalisation des turbines

Chaque turbine comprend un rotor 3 muni en partie haute et en partie basse de plusieurs bras horizontaux 31 portant à leurs extrémités des aubes 4, 23, 36 actionnées par le vent. Ces aubes disposées parallèlement à l'axe du rotor sont orientables. L'incidence de chaque aube par rapport à la direction du vent entrant est modifiée, dans le cycle de rotation, par un dispositif de variation cyclique 5, 6 réalisé par un système de tringlerie 6 solidaire du rotor – ou par des asservissements électriques ou hydrauliques – dont le mouvement alternatif est commandé par un élément de came centrale fixe 5 solidaire du chassis support 17. Le profil de la came centrale 5 est à géométrie variable.

L'invention concerne différents types de turbines à aubes minces et à aubes épaisses décrites ci-après:

Turbines à aubes minces rigides

Une aube mince rigide est constituée dans sa section transversale par un profil aérodynamique formé par deux courbes parallèles; l'épaisseur relative du profil est inférieure à 7%.

Pendant un tour de rotor, le cycle de mouvement d'une aube mince rigide, compté dans le sens de rotation du rotor est le suivant:
- travail positif dans le vent dans la zone avant et la zone arrière du rotor par rapport au vent entrant
- retour à contrevent à traînée minimale
- inversion de courbure par retournement de l'aube.

Le retournement des aubes en fin de phase de rotation à contrevent est réalisé par un mécanisme spécifique destiné à rétablir l'incidence initiale par rapport au vent entrant. Ce mécanisme de compose du côté aube d'un levier de basculement 7 lié à l'axe de rotation de l'aube et du côté chassis d'une came spécialement profilée 27.

Turbines à aubes minces souples

Une aube mince souple est constitué dans sa section transversale par un profil aérodynamique formé par deux courbes parallèles; l'épaisseur relative du profil est inférieure à 7%. Pendant un tour de rotor, le cycle de mouvement d'une aube mince souple, compté dans le sens de rotation du rotor, est le suivant:
- travail positif dans le vent dans la zone avant et la zone arrière du rotor par rapport au vent entrant
- retour à contrevent à trainée minimale
- inversion de courbure de l'aube.

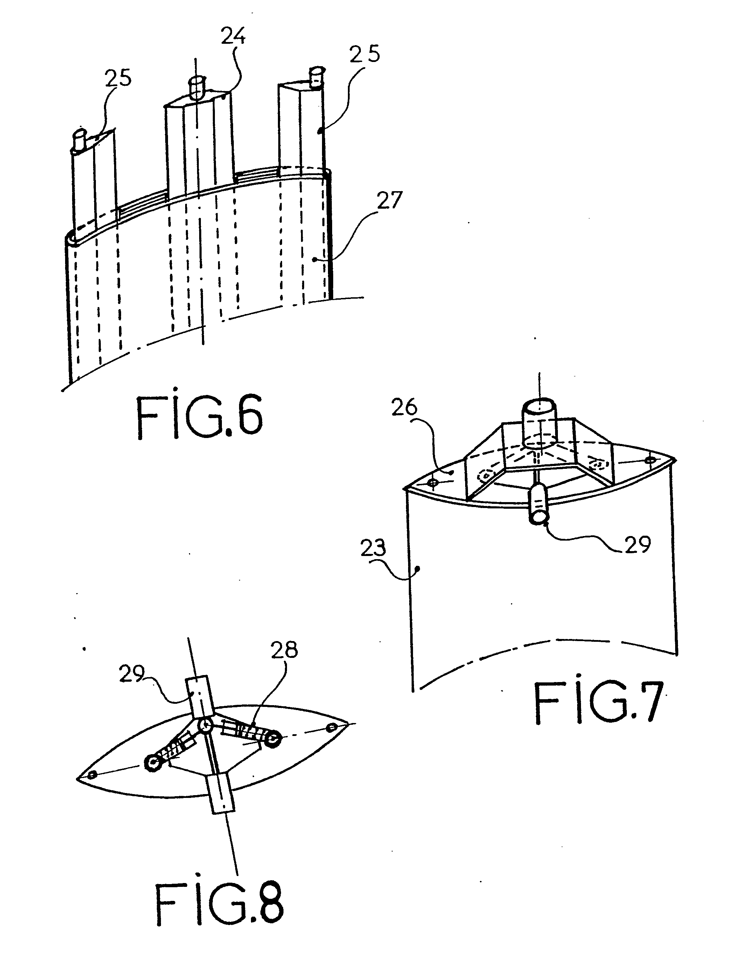

En ce qui concerne la réalisation, une aube souple comprend un longeron central 24 et deux longerons latéraux 25 assurant la transmission des efforts aux deux plaques d'extrémité 26. Les longerons sont recouverts par un revêtement souple 27 assurant la continuité et la souplesse de l'aube. Chaque plaque d'extrémité comprend les deux fixations des longerons latéraux, un mécanisme d'inversion de courbure agissant sur le longeron central, et l'axe de rotation et de fixation de la pale sur le bras support. Le mécanisme d'inversion représenté à la figure 8 est constitué par un ensemble de deux tiges et cylindres à ressort 28 dont le mouvement est commandé par un électroaimant 29 ou en variante un double poussoir mécanique actionné par une came 30 fixée au carénage.

Turbines à aubes épaisses

Une aube épaisse est constituée dans sa section transversale par un profil aérodynamique possédant de très bonnes caractéristiques de portance aux incidences positives et négatives. Les profils utilisés sur les avions de voltige se révèlent particulièrement bien adaptés. L'épaisseur relative du profil est comprise entre 7% et 20%.

Pendant un tour de rotor, le cycle de mouvement d'une aube épaisse, compté dans le sens de rotation du rotor, est le suivant:
- travail positif dans le vent dans la zone avant et la zone arrière du rotor par rapport au vent entrant
- retour à contrevent à traînée minimale.

## Turbines à aubes épaisses déformables

Le but de l'utilisation de l'aube épaisse déformable est d'améliorer le rendement aérodynamique de la turbine, en effet, la difficulté dans l'utilisation pour une turbine à vent d'une aube épaisse à profil dissymétrique vient du fait que pendant la phase de travail positif dans le vent les situations respectives de l'intrados et de l'extrados du profil se trouvent interverties entre la zone de travail à l'avant du rotor par rapport au vent entrant et la zone de travail à l'arrière du rotor: voir figure 13. Le procédé de l'aube à profil épais déformable permet de résoudre cette difficulté. Chaque turbine comprend un rotor 3 muni de plusieurs bras transversaux 31 portant des aubes mobiles 36 disposées parallèlement à l'axe du rotor. Une aube épaisse déformable est constituée par un bec avant 37 fixé par un axe 38 à la structure principale de l'aube; cette structure est constituée par un caisson profilé 39 à longerons incorporés 40. Le revêtement externe 41 souple et élastique est renforcé par des raidisseurs longitudinaux et transversaux transmettant de façon uniforme le mouvement de déformation. Des engrenages 42 actionnés par l'axe de fixation et de rotation 43 de l'aube transmettent le mouvement relatif du bras support par rapport à l'aube et entraînent le pivotement du bec avant 37. Ce pivotement entraîne à son tour du côté opposé le gonflement du revêtement souple, de cette façon le profil symétrique initial devient un profil dissymétrique.

## Equipements communs à tous les types de turbines: figure 1

Chaque turbine comporte les équipements suivants liés au rotor:
- un frein d'immobilisation 9
- une transmission mécanique 10 la reliant à l'une des turbines voisines.

Un certain nombre de turbines sont ainsi reliées mécaniquement entre elles pour former un groupe, ce qui permet de réduire le nombre des arbres de sortie destinés à la production d'énergie, tout en augmentant la puissance unitaire.

Un dispositif auxiliaire constitué par un mécanisme d'orientation 11 permet d'orienter dans le vent chaque groupe de turbines par déplacement en rotation du chassis support 17.

## Production et stockage d'énergie

Au niveau de la production d'énergie, une centrale éolienne conforme à l'invention comprend:

Un multiplicateur de vitesse 12 qui reçoit l'énergie produite par le groupe de turbines et la transmet directement à une génératrice électrique auxiliaire 13 et, par l'intermédiaire des embrayages 14, aux pompes hydrauliques haute pression 15, 16 dont la plage nominale de fonctionnement est située entre 100 et 400 bars; ces pompes sont du type à débit variable.

Les équipements constituant les stockages des énergies produites par la centrale éolienne conforme à l'invention comprennent:

pour l'énergie électrique auxiliaire: des batteries d'accumulateurs pour l'énergie hydraulique: des réservoirs à stockage à haute pression de grand volume constituant des accumulateurs hydrauliques capables de fonctionner à 400 bars. Ce type de réservoir permet de réaliser des stockages correspondant à plusieurs heures de pleine production. Cette énergie hydraulique haute pression peut, à son tour, être utilisée pour entraîner de façon classique par l'intermédiaire de moteurs ou de turbines hydrauliques, toutes sortes d'équipements mécaniques, électriques, hydrauliques ou de climatisation, par exemple: génératrices électriques, pompes à eau, pompes à chaleur.

## Régulation

Un dispositif de régulation mesure en permanence la direction et la vitesse du vent, ainsi que la vitesse de rotation des turbines. Il commande les embrayages 14, le débit des pompes hydrauliques et la variation de géométrie du profil de la came 5, de façon à adapter à tout moment la production d'énergie à celle qui est reçue au niveau des turbines. Ce dispositif de régulation commande, en outre, les volets mobiles 21 situés en avant des carénages et les mécanismes d'orientation vers le vent 11 de chaque groupe de turbines.

Il doit être entendu que les descriptions qui précèdent sont données à titre d'exemple et qu'elles ne limitent nullement le domaine de l'invention dont on ne sortirait pas en remplaçant les organes et équipements décrits par d'autres équivalents.

Les centrales éoliennes conformes à celle décrite dans l'invention peuvent être utilisées de façon intensive dans les pays régulièrement ventés, pour les besoins énergétiques communautaires, industriels et régionaux. Leur réalisation modulaire et les grandes dimensions réalisables pour les turbines, permettent de couvrir toute une gamme de puissances allant de celle qui apparaît nécessaire au niveau d'un village à celles actuellement produites par des centrales hydrauliques ou thermiques.

## Revendications

1. Centrale éolienne comportant une ou plusieurs turbines dont le ou les axes de rotation sont disposés verticalement, chaque turbine comprenant un rotor (3) munie de plusieurs aubes (4, 23, 36) orientables, disposées parallèlement à l'axe du rotor et dont l'incidence par rapport à la direction du vent entrant est modifié au cours de la rotation du rotor (3) par un dispositif de variation cyclique (5, 6) réalisé par un système de tringlerie (6) solidaire du rotor (3) – ou par des asservissements électriques ou hydrauliques – et alterné par un élément de came centrale fixe (5) solidaire du chassis support (17), des carénages (1) permettant de guider le vent vers les aubes (4, 23, 36) actives, de masquer la partie du mouvement de rotation du rotor (3) située à contrevent et de régler l'admission du vent par des volets mobiles (21), et une transmission mécanique (10) la reliant à l'une des turbines voisines, dans le cas de plusieurs turbines, caractérisé par la combinaison des caractéristiques suivantes:

a) le profil de ladite came centrale fixe (5) a une géométrie variable;

b) un frein d'immobilisation (9) est lié au rotor (3);

c) ledit rotor (3) comporte en partie haute et en partie basse plusieurs bras horizontaux (31) munis desdites aubes (4, 23, 36) de section transversale courbe dont la forme correspond à un profil aérodynamique.

2. Centrale éolienne selon la revendication 1, caractérisée en ce que l'énergie mécanique produite est utilisée par l'intermédiaire d'un dispositif multiplicateur de vitesse (12) et d'embrayages (14) pour actionner une ou plusieurs pompes haute pression (15, 16) du type à débit variable et permettant d'atteindre une pression de refoulement de 400 bars.

3. Centrale éolienne selon revendication 2, caractérisée en ce que l'énergie hydraulique haute pression produite est stockée en vue d'une utilisation ultérieure, les moyens de stockage étant constitués par des réservoirs accumulateurs à haute pression, capables de fonctionner à une pression de service de 400 bars.

4. Centrale éolienne selon la revendication 1 ou 2, caractérisée en ce que, dans le cas d'utilisation d'aubes minces rigides dont la section transversale est constituée par un profil aérodynamique formé par deux courbes parallèles l'épaisseur relative est inférieure à 7%, un mécanisme réalise le retournement des aubes en fin de phase de rotation à contrevent, ce mécanisme se composant d'un levier de basculement (7) lié à l'axe de rotation de l'aube et d'une came (27) solidaire du châssis.

5. Centrale éolienne selon la revendication 1 ou 2, caractérisée en ce que les aubes (23) de la turbine sont du type mince et souple, chaque aube (23) étant constituée par un longeron central (24) et deux longerons latéraux (25) recouverts par un revêtement souple (27), l'ensemble des longerons étant tenus par deux plaques d'extrémité (26), et en ce qu'un mécanisme d'inversion de courbure des aubes (23) est constitué par un ensemble de deux tiges et cylindres à ressorts (28) dont le mouvement est commandé par un électroaimant (29) ou une came (30) fixée au carénage (1).

6. Centrale éolienne selon la revendication 1 ou 2, caractérisée en ce que les aubes de la turbine sont du type épais et déformable (36), chaque aube comparable extérieurement à une aile d'avion étant constituée par un bec avant (37) fixé par un axe à la structure principale de l'aube, structure réalisée par un caisson profilé (39) à longerons incorporés. Un revêtement externe (41) souple, élastique et renforcé par des raidisseurs recouvre l'ensemble du caisson profilé et du bec avant, des engrenages (42) actionnés par l'axe de fixation et de rotation (43) de l'aube transmettent le mouvement relatif du bras support par rapport à l'aube, ce qui entraîne le pivotement du bec avant et le gonflement du revêtement souple du côté opposé.

**Claims**

1. A wind power plant having one or more turbines the rotation axis or axes of which are disposed vertically, each turbine including a rotor (3) having a plurality of orientable blades (4, 23, 36) disposed parallel to the rotor axis and the incidence angle of which relative to the direction of the incoming wind is modified in the course of rotation of the rotor (3) by cyclic incidence varying appliance (5, 6) consisting of a linkage system (6) fast with the rotor (3) – or consisting of electric or hydraulic servo controls – and actuated in turn by a fixed central cam unit (5) fixed to the supporting frame (17), shrouds (1) for guiding the wind to the active blades (4, 23, 36) for masking the contrarotating side of the rotor (3) and for adjusting the wind intake by means of movable flaps (21), and a mechanical drive (10) for connecting it to one of the adjacent turbines in the event of plurality thereof, characterised by the arrangement of the following features:

a) the profile of said fixed central cam (5) is of variable geometry

b) a locking up brake (9) is connected to the rotor (3)

c) the above mentioned rotor (3) comprises at the upper and lower ends a plurality of horizontal arms (31) carrying said blades (4, 23, 36) of curved cross-section the shape of which corresponding with an aerodynamic airfoil.

2. A wind power plant according to claim 1, characterised in that the mechanical energy produced is made use of through the agency of speed step-up gearing (12) and clutches (14) to drive one or more high pressure hydraulic pumps (15, 16) of a variable output type and able to reach an output pressure of 400 bars.

3. A wind power plant according to claim 2, characterised in that the high pressure hydraulic energy produced is stored for subsequent use, the storage means being formed by high pressure storage tanks able to work at a service pressure of 400 bars.

4. A wind power plant according to claim 1 or 2, characterised in that, in case of use of thin and rigid blades the cross section of which being formed by an aerodynamic airfoil shaped with two parallel curves the relative thickness being less than 7%, a mechanism operates for reversing the blades at the end of the contrarotating phase, said mechanism consisting of a reversing lever (7) connected to the blade hinge-pin and a cam (27) fast with the frame.

5. A wind power plant according to claim 1 or 2, characterised in that the turbine blades (23) are of the flexible thin type, each blade (23) being formed by a central spar (24) and two lateral spars (25) covered by a flexible skin (27), a whole spars being restrained by two end plates (26), and in that a blade curvature reversing mechanism is consisting of a set of two spring-loaded cylinders and rods (28) actuated by an electromagnet (29) or a cam (30) fixed to the shroud (1).

6. A wind power plant according to claim 1 or 2, characterised in that the turbine blades are of the thick and deformable type (36), each blade externally comparable to an aircraft wing being formed by a front nose (37) hindgedly connected to the main blade structure, which structure is formed by a streamlined box (39) with incorporated spars. A flexible and elastic outer skin (41) reinforced by stiffeners covers the whole of the streamlined box member and the front nose, gears (42) rotated by the blade hinge-pin (43) transmit motion of the supporting arm relative to the blade, thereby to cause pivotal motion of said front nose and distension of said flexible skin on the opposite side.

**Patentansprüche**

1. Windkraftwerk mit einem oder mehreren Windrädern, deren Drehachse bzw. deren Drehachsen senkrecht angeordnet sind, wobei jedes Windrad einen Rotor (3) aufweist, der mit mehreren verstellbaren Flügeln (4, 23, 36) versehen ist, die zur Achse des Rotors parallel angeordnet sind und deren Stellung mit Bezug auf die Richtung des ankommenden Windes im Verlauf der Drehung des Rotors (3) geändert wird mittels einer Vorrichtung für zyklische Änderung (5, 6), die realisiert ist durch ein Gestängesystem (6), welches mit dem Rotor (3) verbunden ist, oder realisiert ist durch elektrische oder hydraulische Steuervorrichtungen, wobei diese Stellung der Flügel abgewechselt wird mittels eines zentralen ortsfesten Nockenelementes (5), welches mit einem Traggestell (17) verbunden ist, aerodynamische Gebilde (1) vorgesehen sind, welche es ermöglichen, den Wind in Richtung gegen die aktiven Flügel (4, 23, 36) zu führen, den Drehbewegungsteil des Rotors (3) abzudecken, der gegenüber liegt, und den Zutritt des Windes durch bewegliche Klappen (21) zu regeln, und wobei eine mechanische Kraftübertragungsvorrichtung (10) vorgesehen ist, welche das Windrat mit einem der benachbarten Windräder verbindet, wenn mehrere Windräder vorhanden sind, gekennzeichnet durch die Kombination der folgenden Merkmale:

a) Das Profil des ortsfesten mittleren Nockens (5) hat eine variable Geometrie;

b) Eine Bremse (9) zum Unbeweglichmachen ist mit dem Rotor (3) verbunden;

c) Der Rotor (3) weist am oberen Teil und am unteren Teil mehrere waagrechte Arme (31) auf, die mit den genannten Flügeln (4, 23, 36) versehen sind, die gekrümmten Querschnitt haben, dessen Gestalt einem aerodynamischen Profil entspricht.

2. Windkraftwerk nach Anspruch 1, dadurch gekennzeichnet, dass die erzeugte mechanische Energie ausgenutzt wird unter Zwischenschaltung einer Vorrichtung (12) für Geschwindigkeitsvervielfachung und von Kupplungen (14), um eine oder mehrere Hochdruckpumpen (15, 16) derjenigen Art zu betätigen, die eine variable Liefermenge hat und es ermöglicht, einen Abgabedruck von 400 bar zu erreichen.

3. Windkraftwerk nach Anspruch 2, dadurch gekennzeichnet, dass die erzeugte hydraulische Hochdruckenergie im Hinblick auf spätere Verwendung gespeichert wird, und dass die Mittel zum Speichern gebildet sind durch Hochdruckspeicherbehälter, die mit einem Betriebsdruck von 400 bar arbeiten können.

4. Windkraftwerk nach Anspruch 2 oder 3, dadurch gekennzeichnet, dass im Fall der Verwendung von dünnen starren Flügeln, deren Querschnitt ein aerodynamisches Profil aufweist, das gebildet ist durch zwei parallele Kurven und dessen relative Dicke oder Dichte kleiner als 7% ist, und ein Mechanismus das Rückführen der Flügel am Ende der Drehphase in die Ausgangsstellung verwirklicht und dieser Mechanismus sich zusammensetzt aus einem Schwenkhebel (7), der mit der Drehachse des Flügels verbunden ist, und aus einem mit dem Gestell verbundenen Nocken (27).

5. Windkraftwerk nach Anspruch 1 oder 2, dadurch gekennzeichnet, dass die Flügel (23) des Windrades dünn und weich oder biegsam sind, jeder Flügel (23) dargestellt ist durch einen mittleren Längsträger (24) und zwei Seitenträger (25), die von einer weichen oder biegsamen Verkleidung (27) bedeckt sind, das Trägergebilde von zwei Endplatten (26) getragen ist, und dass ein Mechanismus zum Umkehren der Krümmung der Flügel (23) dargestellt ist durch ein Gebilde aus zwei Stangen und Federzylindern (28), deren Bewegung gesteuert ist durch einen Elektromagneten (29) oder durch einen Nocken (30), der an dem aerodynamischen Gebilde (1) befestigt ist.

6. Windkraftwerk nach Anspruch 1 oder 2, dadurch gekennzeichnet, dass die Flügel (36) des Windrades dick und verformbar sind, jeder Flügel aussen einem Flugzeugflügel vergleichbar ist und dargestellt ist durch ein vorderes Mundstück (37), welches mit einer Achse an der Hauptstruktur des Flügels befestigt ist, die realisiert ist durch einen profilierten Kasten (39) mit in ihm angeordneten Trägern, eine weiche oder biegsame äussere Verkleidung (41), die elastisch ist und die durch Verstärker oder Streben verstärkt ist, das Gebilde aus profiliertem Kasten und vorderem Mundstück bedeckt, Zahngetriebe (42), die von der Achse (43) der Befestigung und der Drehung des Flügels betätigt werden, die relative Bewegung des Tragarmes mit Bezug auf den Flügel übertragen, was zu einem Verschwenken des vorderen Mundstückes und dem Aufblasen der weichen oder biegsamen Verkleidung von der gegenüberliegenden Seite führt.

# FIG. 1

A
A

3

4

8

9   10   17

15   14   12   13   14   16   11

# FIG.2

Coupe suivant AA

1   5

6

21   2

3

vent

vent

# FIG.3

# FIG.4

FIG.5

vent

FIG.6

FIG.7

FIG.8

FIG.9

vent

FIG.10

vent

FIG.11